# EUROPÄISCHE PATENTSCHRIFT

(11) **EP 0 852 841 B1**
(45) Veröffentlichungstag und Bekanntmachung des Hinweises auf die Patenterteilung: **19.12.2001**
(21) Anmeldenummer: 96939807.2
(22) Anmeldetag: 11.09.1996
(51) Int. Cl.: H02J 3/06, H02J 3/18, H02M 7/48

(54) **NETZFREUNDLICHER STROMRICHTERGESTEUERTER, SPANNUNGSEINPRÄGENDER SCHRÄGTRANSFORMATOR GROSSER LEISTUNG**
MAINS-ADAPTED VOLTAGE-APPLYING HIGH-OUTPUT OBLIQUE TRANSFORMER CONTROLLED BY A CURRENT CONVERTER
TRANSFORMATEUR OBLIQUE DE PUISSANCE ELEVEE, COMPATIBLE AVEC LE RESEAU, PILOTE PAR CONVERTISSEUR DE COURANT ET APPLIQUANT UNE TENSION

(30) Priorität: 29.09.1995 DE 19536468
(43) Veröffentlichungstag der Anmeldung: 15.07.1998
(73) Patentinhaber: SIEMENS AKTIENGESELLSCHAFT, 80333 München (DE)
(72) Erfinder: SCHETTLER, Frank, D-91054 Erlangen (DE)
(86) Internationale Anmeldenummer: DE9601706
(87) Internationale Veröffentlichungsnummer: WO9713309

(56) Entgegenhaltungen:
- GB-A- 2 293 928
- IEEE TRANSACTIONS ON POWER DELIVERY, Bd. 10, Nr. 2, 1.April 1995, Seiten 1085-1097, XP000539135 GYUGYI I ET AL: "THE UNIFIED POWER FLOW CONTROLLER: A NEW APPROACH TO POWER TRANSMISSION CONTROL" in der Anmeldung erwähnt
- ELEKTRISCHE BAHNEN, Bd. 93, Nr. 1/02, 1.Januar 1995, Seiten 43-48, XP000492379 FIEBER E ET AL: "STATISCHER UMRICHTER MULDENSTEIN" in der Anmeldung erwähnt
- IEEE TRANSACTIONS ON POWER DELIVERY, Bd. 10, Nr. 2, 1.April 1995, Seiten 732-738, XP000539099 MENZIES R W ET AL: "ADVANCED STATIC COMPENSATION USING A MULTILEVEL GTO THYRISTOR INVERTER" in der Anmeldung erwähnt
- PROCEEDINGS OF THE ANNUAL POWER ELECTRONICS SPECIALISTS CONFERENCE (PESC), TOLEDO, JUNE 29 - JULY 3, 1992, Bd. 1, 29.Juni 1992, INSTITUTE OF ELECTRICAL AND ELECTRONICS ENGINEERS, Seiten 521-529, XP000369067 WUEST D ET AL: "A COMPARISON OF DIFFERENT CIRCUIT CONFIGURATIONS FOR AN ADVANCED STATIC VAR COMPENSATOR (ASVC)" in der Anmeldung erwähnt
- IEEE TRANSACTIONS ON POWER SYSTEMS, Bd. 8, Nr. 1, 1.Februar 1993, Seiten 371-377, XP000385271 SHOSUKE MORI: "DEVELOPMENT OF A LARGE STATIC VAR GENERATOR USING SELF-COMMUTATED INVERTERS FOR IMPROVING POWER SYSTEM STABILITY" in der Anmeldung erwähnt
- PROCEEDINGS OF THE EUROPEAN CONFERENCE ON POWER ELECTRONICS AND APPLICATIONS. (EPE), AACHEN, 9 - 12 OCTOBER, 1989, Bd. 2, 9.Oktober 1989, LEONHARD W;HOLTZ J; SKUDELNY H C, Seiten 577-582, XP000143450 BAECHLE CH ET AL: "REQUIREMENTS ON THE CONTROL OF A THREE-LEVEL FOUR QUADRANT POWER CONVERTER IN A TRACTION APPLICATION"

## Beschreibung

Die Erfindung bezieht sich auf einen netzfreundlichen stromrichtergesteuerten, spannungseinprägenden Schrägtransformator großer Leistung gemäß dem Oberbegriff des Anspruchs 1.

Durch eine starke Vermaschung der Hochspannungsnetze besteht die Notwendigkeit, den Leistungsfluß und seine Richtung beliebig oder nach Bedarf auf ausgewählten Übertragungsleitungen steuern zu können. Hierzu werden in der Regel sogenannte Schrägtransformatoranordnungen eingesetzt. Sie bestehen im allgemeinen aus einem dreiphasigen Erregertransformator und einem dreiphasigen Zusatztransformator. Die Eingangswicklung des Erregertransformators bezieht elektrische Leistung aus dem Netz. Die Ausgangswicklung ist üblicherweise mit einem Stufenschalter versehen. Sie liefert die elektrische Leistung an die Eingangswicklung des Zusatztransformators, dessen Ausgangswicklung in Reihe zur Übertragungsleitung geschaltet ist und vom gesamten Leitungsstrom durchflossen wird. Im Zusatztransformator wird so eine Zusatzspannung erzeugt, deren Betrag von der Stellung des Stufenschalters abhängt. Ihre Phasenlage wird durch die Schaltgruppen des Erreger- und Zusatztransformators bestimmt. Die Spannung an der Ausgangswicklung des Zusatztransformators wird Schrägspannung genannt.

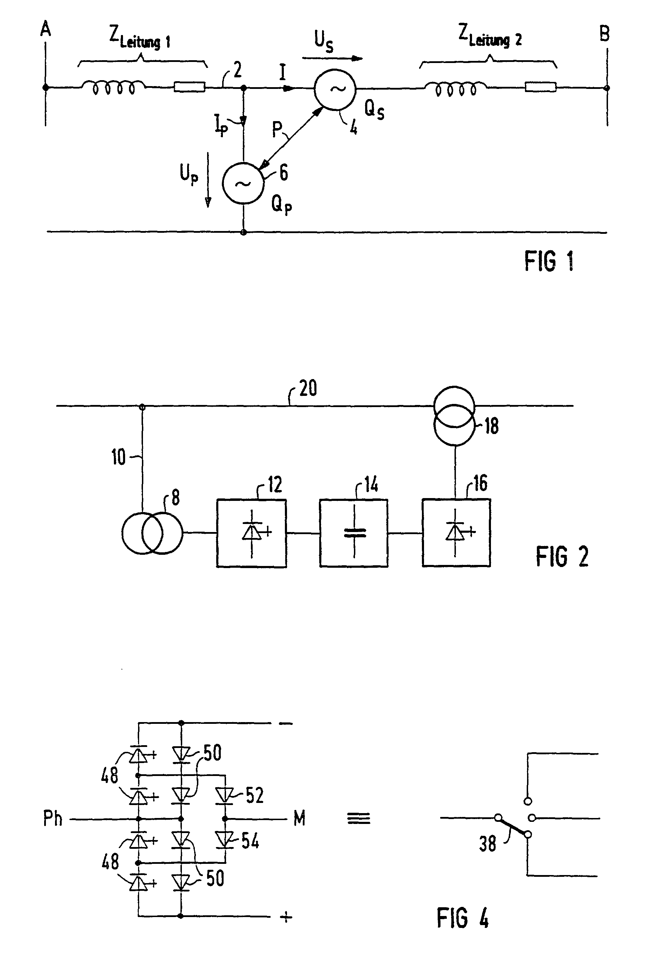

Das Funktionsprinzip einer Leistungsflußregelung ist in der Figur 1 dargestellt. In eine Übertragungsleitung 2 wird eine steuerbare Spannungsquelle 4 seriell eingeschaltet. Durch eine zielgerichtete Veränderung des Betrages und der Phasenlage der Serienspannung U_{S} wird der Leistungsfluß durch die Übertragungsleitung 2 beeinflußt. Aus der Phasenlage der Serienspannung U_{S} zum in der Leitung 2 fließenden Strom I ergibt sich die Wirkleistung P und die Blindleistung Q_{S}, die diese Spannungsquelle 4 mit dem Netz austauscht. Die Wirkleistung P kann entweder großen Energiespeichern zugeführt oder entnommen werden oder sie wird, wie in Figur 1 gezeigt, über eine zweite Spannungsquelle 6 mit der Spannung U_{P}, die parallel an das Netz geschaltet ist, aus dem Netz bezogen und dem Netz wieder zugeführt. Der Einsatz einer parallelen Spannungsquelle 6 ist vorteilhaft, da zusätzlich zu der im Zusammenhang mit der Serienschaltung erforderlichen Wirkleistung P auch Blindleistung Qₚ mit dem Netz ausgetauscht werden kann. Dieser Blindleistungsaustausch Qₚ der Parallelschaltung ist unabhängig von dem der Serienschaltung.

Leistungsflußregler, die nach dem beschriebenen Prinzip arbeiten, können mit Spannungswechselrichtern aufgebaut werden. Sie bestehen entsprechend der Figur 2 aus folgenden Hauptkomponenten:
- Transformator 8 im Querzweig 10, auch als Erregertransformator bezeichnet
- Wechselrichter 12 im Querzweig 10, auch erregerseitiger Stromrichter genannt
- kapazitiver Energiespeicher 14
- Wechselrichter 16 im Längszweig 20, auch als ausgangsseitiger Stromrichter bezeichnet
- Transformator 18 im Längszweig 20, auch als Zusatztransformator bezeichnet.

Die beiden Wechselrichter 12 und 16 formen die Gleichspannung des kapazitiven Energiespeichers 14 in eine stufenförmige Wechselspannung um. Diese Wechselspannung wird über die Übersetzungsverhältnisse der Transformatoren 8 und 18 den gegebenen Netzspannungen angepaßt. Eine derartige Schaltung wird als **U**nified Power **F**low **C**ontroller (UPFC) bezeichnet.

Aus dem Aufsatz "The Unified Power Flow Controller: A New Approach to Power Transmission Control", veröffentlicht in IEEE Transactions on Power Delivery, Vol. 10, No. 2, April 1995, Seiten 1085 bis 1093, ist eine UPFC-Schaltung bekannt. Diese Schaltung besteht aus einem erregerseitigen Wechselrichter, der über einen Erregertransformator mit dem Netz parallel geschaltet wird, einem ausgangsseitigen Wechselrichter, der über einen Zusatztransformator mit dem Netz in Serie geschaltet wird, sowie einem Kondensator, über den beide Wechselrichter auf ihrer Gleichspannungsseite miteinander verbunden sind. Wie die Figur 1 dieses Aufsatzes zeigt, ist jeder der beiden Stromrichter als 6-pulsige Drehstrombrückenschaltung mit sechs abschaltbaren Leistungshalbleitern, insbesondere Gate-Turn-Off-(GTO-)Thyristoren ausgeführt, wobei zu jedem GTO-Thyristor eine Freilaufdiode antiparallel geschaltet wird. Bei den Betrachtungen soll diese Schaltung als Zweipunktschaltung bezeichnet werden, weil durch die Ansteuerung der GTO-Thyristoren der positive oder der negative Anschluß des Energiespeichers mit dem Anschluß einer Phase des Drehstromsystems verbunden werden kann.

Die erreichbare Leistung dieser Zweipunktschaltung wird durch die Spannungsfestigkeit und den abschaltbaren Strom des eingesetzten GTO-Thyristors bestimmt. Dies gilt, wenn der GTO-Thyristor ausreichend gekühlt wird. Es kann davon ausgegangen werden, daß dies heute realisierbar ist.

Da sich die Erfindung auf einen Leistungsflußregler großer Leistung bezieht, werden nachfolgend die bekannten Möglichkeiten aufgeführt, mit denen die Leistung der Gesamtanlage erhöht werden kann. Dabei können nach dem bisherigen Stand der Technik zwei Lösungwege eingeschlagen werden. Ein Weg führt über die Erhöhung der Leistung eines Wechselrichters, der andere nutzt die Zusammenschaltung mehrerer Wechselrichter aus.

Ist die geforderte Leistung der UPFC-Schaltung der genannten Entgegenhaltung gemäß Figur 1 höher als die mit einem GTO-Thyristor erreichbare, kann eine direkte Reihenschaltung der GTO-Thyristoren angewendet werden. Die höhere Leistung wird dabei durch eine höhere Spannung am kapazitiven Energiespeicher erreicht.

Als Vorteile der direkten Reihenschaltung sind zu nennen:
- Die Leistung der Zweipunktschaltung kann feinstufig gesteigert werden.
- Durch Einsatz zusätzlicher GTO-Thyristoren in die Reihenschaltung kann Redundanz erreicht werden.

Die direkte Reihenschaltung von GTO-Thyristoren besitzt folgende Nachteile:
- Bei der Ansteuerung der GTO-Thyristoren ist darauf zu achten, daß alle direkt in Reihe geschalteten GTO-Thyristoren exakt zeitgleich schalten, damit Spannungsfehlverteilungen zwischen den in Reihe geschalteten GTO-Thyristoren vermieden werden.
- Die grobe Treppenform der Wechselspannung des Stromrichters wird mit Erhöhung der Leistung nicht verbessert Im allgemeinen sind diese Schaltungen daher nicht ohne zusätzliche Filter zur Verringerung der Verzerrungen der Netzspannung einsetzbar.
- Die bekannten Dämpfungsbeschaltungen für die GTO-Thyristoren in direkter Serienschaltung besitzen wesentlich höhere Verluste, als die für einzelne GTO-Thyristoren einsetzbaren.
- Die Spannungsausnutzung der GTO-Thyristoren sinkt mit zunehmender Reihenschaltzahl. Das führt zu einer überproportionalen Erhöhung der Reihenschaltzahl im Vergleich zur Erhöhung der Kondensatorspannung, was höhere Anschaffungskosten sowie spezifische Verluste und damit höhere Betriebskosten der Schaltung nach sich zieht.
- Bisher wurden keine Reihenschaltzahlen größer sechs bekannt, wodurch die maximal erreichbare Leistung einer Wechselrichtereinheit als begrenzt betrachtet werden muß.

Ein weiterer Weg zur Erhöhung der Leistung eines Wechselrichters ist die indirekte Reihenschaltung von zwei GTO-Thyristoren in der Dreipunktschaltung. Bei dieser Schaltung kann der Anschluß der Phase des Drehstromsystems mit dem positiven, negativen oder Mittelanschluß des Energiespeichers verbunden werden. Ein Beispiel für die Anwendung einer solchen Schaltung ist in dem Aufsatz "Statischer Umrichter Muldenstein", veröffentlicht in der DE-Zeitung "eb-Elektrische Bahnen", Band 93 (1995), Heft 1/2, Seiten 43 bis 48, beschrieben. Das Bild 4 dieses Aufsatzes zeigt einen Vierquadrantensteller, in dem zwei Dreipunkt-Phasenbausteine eingesetzt sind.

In dem Aufsatz "Advanced Static Compensation Using a Multilevel GTO Thyristor Inverter", IEEE 94 SM 396-2 PWRD, Seiten 1 bis 7, ist die Erweiterung der Dreipunktschaltung zu einer n-Punktschaltung beschrieben. Der Aufsatz stellt folgende Vorteile der n-Punktschaltung heraus:
- Die Spannung des Wechselrichters kann ohne direkte Serienschaltung von GTO-Thyristoren erhöht werden, wodurch die Notwendigkeit des exakt zeitgleichen Schaltens der GTO-Thyristoren umgangen wird.
- Das zeitversetzte Anschalten der einzelnen Spannungsstufen ermöglicht eine bessere Annäherung der stufenförmigen Wechselspannung an die Sinusform und damit einen geringeren Anteil höherer Harmonischer im Ausgangsstrom. Dadurch können die eingesetzten GTO-Thyristoren besser ausgenutzt und die Grundschwingungsleistung des Wechselrichters kann erhöht werden.

Außerdem können weitere Vorteile herausgestellt werden:
- Mit der n-Punktschaltung ist eine Leistungserhöhung ohne zusätzliche induktive Komponenten (Transformatoren oder Drehstromsaugdrosseln) möglich. Induktive Komponenten sind in der Anschaffung teuerer und besitzen höhere Verluste als vergleichbare kapazitive Komponenten.
- Die n-Punktschaltung kann über einen Standardtransformator an das Netz angeschlossen werden.
- Die stufenförmige Wechselspannung kann der Sinusform angenähert werden, ohne von der Grundfrequenz-Modulation der GTO-Thyristor-Ansteuerung abzugehen. Grundfrequenz-Modulation heißt, daß jeder GTO-Thyristor nur einmal pro Periode an- bzw. abgeschaltet wird. Eine höherfrequente GTO-Thyristor-Ansteuerung (Pulsweitenmodulation) ist wegen der Abschaltzeiten und Schonzeiten der Bauelemente in der praktischen Anwendung auf Frequenzen bis 250 Hz begrenzt. Dies ermöglicht zwar eine Verringerung der niedrigen Harmonischen (Ordnungszahlen 5 bis 17), führt jedoch zu einer Erhöhung der nächst höheren Harmonischen (ab 19-te). Dies kann zu zusätzlichem Filteraufwand zwingen. Ein weiterer wesentlicher Nachteil einer höherfrequenten GTO-Thyristor-Ansteuerung sind die proportional zur Schaltfrequenz ansteigenden Schaltverluste im Wechselrichter.

Das Konzept n-Punktschaltung besitzt folgende Nachteile:
- Verschiedene geforderte Wechselrichterleistungen erfordern verschiedene Punktzahlen und demzufolge verschiedene konstruktive Ausführungen eines n-Punktphasenbausteins.
- Ab n>3 ist bei den Dioden, die zu den Zwischenanschlüssen des Energiespeichers führen, teilweise eine höhere Spannungsfestigkeit erforderlich.
- Die einzelnen n-1 Kondensatorspannungen müssen auf gleiche Höhe geregelt werden. Dies ist aus praktischer Sicht schwierig zu erreichen.
- Um verbotene Schaltzustände auszuschließen, ist eine komplizierte Ansteuerlogik der GTO-Thyristoren erforderlich. Unter einen verbotenen Schaltzustand ist zu verstehen, daß mehr als n-1 in Reihe angeordnete GTO-Thyristoren gleichzeitig eingeschaltet sind.

Es kann angenommen werden, daß diese Nachteile die Realisierung von Punktzahlen n>3 bisher verhindert haben.

Durch die Verschaltung mehrerer Wechselrichter können Wechselrichteranlagen entstehen, die eine höhere Gesamtleistung erreichen. Dabei wird neben der Erhöhung der Leistung auch eine Verringerung der Spannungsverzerrungen sowie ein sinusförmiger Strom angestrebt.

Aus dem Aufsatz "A Comparison of Different Circuit Configurations for an Advanced Static Var Compensator (ASVC)", veröffentlicht in "PESC'92 Record", 23rd Annual IEEE Power Electronics Specialists Conference Toledo, Spain, 1992, Seiten 521 bis 529, sind verschiedene Möglichkeiten der Verschaltung von Wechselrichtern bekannt. Als Wechselrichter wird in diesem Aufsatz entweder ein Zweipunkt- oder ein Dreipunkt-Wechselrichter eingesetzt. Die GTO-Thyristoren werden mit Grundfrequenz-Modulation gesteuert, was bedeutet, daß jeder GTO-Thyristor nur einmal pro Periode ein- und ausgeschaltet wird.

In der Figur 8 auf Seite 524 dieses Aufsatzes sind verschiedene Möglichkeiten der Verschaltung von zwei Stromrichtern dargestellt. Wie der in dem Aufsatz durchgeführte Vergleich dieser Alternativen zeigt, läßt sich die größte Grundschwingungsleistung mit den Schaltungsvarianten n und o erreichen. Bei diesen Varianten werden je zwei Dreipunkt-Schaltungen, die drehstromseitig über die Primärwicklungen der Transformatoren in Reihe geschaltet sind, eingesetzt. Die beiden Transformatoren sind in unterschiedlichen Schaltgruppen (Yy und Yd) ausgeführt, wodurch eine 12-pulsige Netzrückwirkung erreicht wird. Durch die drehstromseitige Reihenschaltung der Wechselrichter wird erreicht, daß der Wechselrichterstrom keine Harmonischen der Ordnungszahlen 5, 7, 17, 19 usw. enthält. Die eingesetzten GTO-Thyristoren können dadurch besser ausgenutzt werden. Der Unterschied der beiden Varianten n und o besteht in der Verschaltung der Gleichspannungsseite, was auf die erreichbare Leistung keinen wesentlichen Einfluß hat.

Aus der Veröffentlichung "Development of a Large Static Var Generator Using Self-Commutated Inverters for Improving Power System Stability", abgedruckt in IEEE Transactions on Power Systems, Vol. 8, No. 1, Febr. 1993, Seiten 371 bis 377, ist ein SVG (**S**tatic **V**ar **C**ompensator) mit einer Leistung von 80 MVA bekannt. Die hohe Leistung wird bei dieser Anlage durch eine Reihenschaltung von sechs GTO-Thyristoren pro Ventil und eine Reihenschaltung von acht Wechselrichtern über einen speziellen Mehrwicklungstransformator erreicht. Wie bei den Varianten n und o des zuvor zitierten Aufsatzes wird die Erhöhung der Grundschwingungsleistung durch eine Schwenkung der einzelnen Sekundärwicklungen des Transformators erreicht. Die acht Sekundärwicklungen des Transformators sind zueinander um 7,5° el. geschwenkt, was zu einer 48-pulsigen Netzrückwirkung führt.

Als Vorteil der Erhöhung der Leistung durch drehstromseitige Reihenschaltungen kann allgemein herausgestellt werden:
- Mit der Erhöhung der Leistung können durch geeignete Transformatorschaltungen die Netzverzerrungen verringert werden.
- Durch die drehstromseitige Reihenschaltung der Wechselrichter über Transformatoren kann der Phasenstrom jedes einzelnen Wechselrichters sinusförmiger gemacht werden und damit die Schaltleistung des eingesetzten GTO-Thyristors besser ausgenutzt werden.

Diese Schaltung besitzt jedoch folgende Nachteile:
- Die Leistung läßt sich nur grob durch Hinzufügen und Weglassen ganzer Wechselrichter abstufen. Im Falle einer direkten Reihenschaltung von GTO-Thyristoren kann eine feinere Stufung durch die GTO-Thyristor-Anzahl erfolgen.
- Es sind hochgradig spezialisierte und deshalb teuere Transformatoren erforderlich (Sonderanfertigung).
- Bei Anschluß an das Hochspannungsnetz ist ein zusätzlicher Transformator erforderlich, um die Anschlußspannung auf eine Zwischenspannung zu transformieren, auf die der Spezialtransformator primärseitig ausgelegt werden kann.
- Die Transformatoren bringen relativ hohe Betriebsverluste mit sich.

Aus einer älteren Gebrauchsmusteranmeldung G 94 16 048.1 ist ein statischer Kompensator (GTO-SVC) bekannt, bei dem eine Erhöhung der Leistung durch eine Kaskadierung von Stromrichtermoduln erreicht wird. Als Stromrichtermodul wird dabei ein Dreipunkt-Phasenbaustein verwendet, wobei auch Zweipunkt- oder allgemein n-Punktbausteine einsetzbar sind. Durch die kaskadenförmige Anordnung der Phasenbausteine können nacheinander mehrere Kondensatoren in einer Phase eingeschaltet bzw. ausgeschaltet werden. Die Wahl der Ein- und Ausschaltzeitpunkte kann so gewählt werden, daß die Ausgangsspannung des Kaskadenwechselrichters möglichst gut der Sinusform angenähert wird. Dadurch wird der Anteil höherer Harmonischer im Strom verringert und so die Ausnutzung der GTO-Thyristoren erhöht.

Die Vorteile dieser Lösung sind:
- Die Vorteile der n-Punktschaltung kommen voll zur Geltung.
- Die Leistung wird durch mehrfachen Einsatz des gleichen Wechselrichterbausteines erhöht, es entfällt die spezielle Entwicklung verschiedener Bausteine für verschiedene Punktzahlen.
- Die einzelnen Kondensatorspannungen sind unabhängig voneinander regelbar.
- Jeder Wechselrichterbaustein stellt in sich eine abgeschlossene Einheit dar. Es können keine zusätzlichen verbotenen Schaltzustände auftreten.

Als Nachteile sind zu nennen:
- Durch die Trennung der drei Phasen im Zusammenhang mit der Kaskadierung entsteht ein höherer Kondensatoraufwand.
- Die Leistung kann durch Hinzufügen oder Weglassen einzelner Kaskaden abgestuft werden. Im Falle einer direkten Reihenschaltung von GTO-Thyristoren kann eine feinere Abstufung durch die GTO-Thyristor-Anzahl erreicht werden.

Der Erfindung liegt nun die Aufgabe zugrunde, einen netzfreundlichen stromrichtergesteuerten, spannungseinprägenden Schrägtransformator großer Leistung anzugeben, dessen Gesamtleistung den jeweiligen Anforderungen stufenweise angepaßt werden kann, wobei diese Realisierung kostengünstig sein soll.

Diese Aufgabe wird erfindungsgemäß gelöst durch die Merkmale des Anspruchs 1.

Dadurch, daß jede Phase des erregerseitigen Stromrichters des Schrägtransformators aus mehreren Doppelkaskaden und jede Phase seines ausgangsseitigen Stromrichters aus mehreren Vierquadrantenstellern aufgebaut wird, wobei der Zusatztransformator ebenfalls pro Phase aus mehreren Zweiwicklungstransformatoren aufgebaut ist, erhält man einen netzfreundlichen stromrichtergesteuerten, spannungseinprägenden Schrägtransformator großer Leistung, dessen Gesamtleistung den jeweiligen Anforderungen angepaßt werden kann. Es entsteht ein Baukastenprinzip, mit dessen Hilfe die Gesamtleistung des Schrägtransformators, auch Leistungsflußregler genannt, den jeweiligen Anforderungen stufenweise angepaßt werden kann, ohne daß dafür Spezialausführungen der Komponenten erforderlich wären. Durch den mehrfachen Einsatz der gleichen Einheiten wird somit eine kostengünstige Realisierung der Anlage möglich.

Diese vorgeschlagene Ausführungsform des Schrägtransformators zur Leistungsflußregelung besitzt neben den erwähnten wirtschaftlichen Vorteilen auch günstige technische Eigenschaften im Vergleich zu bisher bekannten Konzepten.

Weitere vorteilhafte Ausgestaltungen sind den Unteransprüchen 2 bis 8 zu entnehmen.

Zur weiteren Erläuterung der Erfindung wird auf die Zeichnung Bezug genommen, in der zwei Ausführungsbeispiele eines netzfreundlichen stromrichtergesteuerten, spannungseinprägenden Schrägtransformators schematisch veranschaulicht sind.
- Figur 1: zeigt das Funktionsprinzip einer Leistungsflußregelung, in
- Figur 2: ist ein Schaltbild eines stromrichtergesteuerten, spannungseinprägenden Schrägtransformators dargestellt, die
- Figur 3: zeigt eine erste Ausführungsform eines erfindungsgemäßen Schrägtransformators, die
- Figur 4: zeigt die Realisierung einer Schalteinrichtung des Schrägtransformators nach Figur 3, in
- Figur 5: ist der Verlauf einer einprägenden Schrägspannung des Schrägtransformators in einem Diagramm über den Winkei υ dargestellt und die
- Figur 6: zeigt eine vorteilhafte Ausführungsform des erfindungsgemäßen Schrägtransformators.

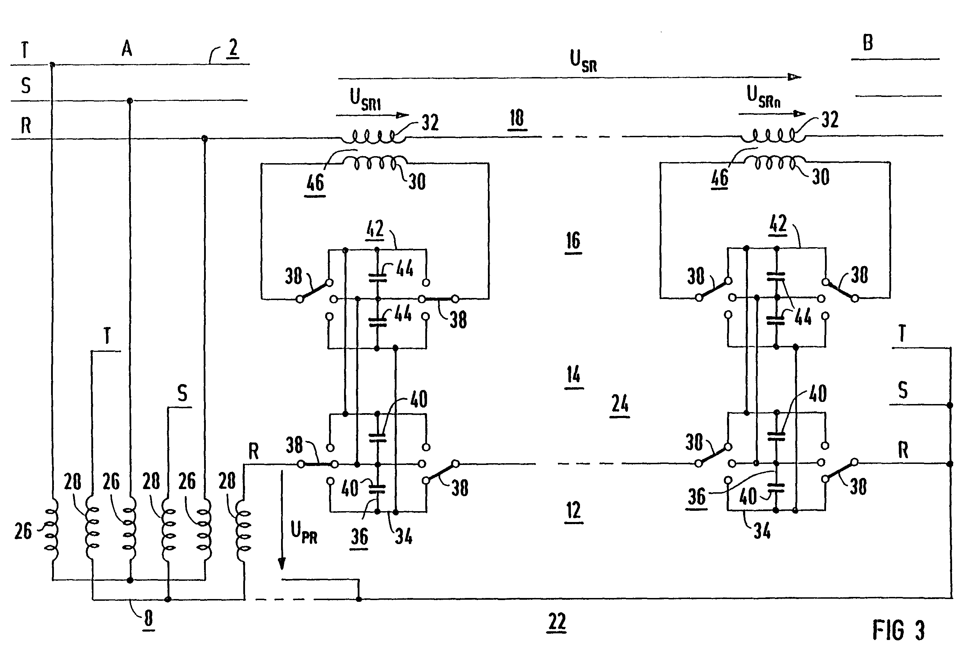

Die Figur 3 zeigt ein Prinzipschaltbild eines erfindungsgemäßen stromrichtergesteuerten, spannungseinprägenden Schragtransformators 22 großer Leistung, der zur Lastflußregelung benutzt wird. Wegen der Übersichtlichkeit ist nur eine Phase R des Schrägtransformators 22 im einzelnen dargestellt. Dieser stromrichtergesteuerte, spannungseinprägende Schrägtransformator 22 ist mit den Leitungen R, S und T einer elektrischen Übertragungsleitung 2 elektrisch leitend verbunden. Am Erregerknoten A ist ein Netz und am Anschlußknoten B ein anderes Netz angeschlossen. Zur Leistungsflußsteuerung zwischen diesen beiden Netzen ist der stromrichtergesteuerte, spannungseinprägende Schrägtransformator 22 vorgesehen. Dieser Schrägtransformator 22 umfaßt im wesentlichen einen Erregertransformator 8, einen Umrichter 24 und einen Zusatztransformator 18. Der Umrichter 24 besteht aus einem erregerseitigen und einem ausgangsseitigen Stromrichter 12 und 16, die mittels eines Gleichstrom-Zwischenkreises 14 miteinander elektrisch verknüpft sind. Die Stromrichter 12 und 16 sind selbstgeführte Stromrichter, die jeweils als Stromrichterventile abschaltbare Leistungshalbleiterschalter aufweisen.

Die Eingangswicklungen 26 des Erregertransformators 8 sind mit den Leitungen R, S und T am Erregerknoten A verbunden und tauschen elektrische Leistung mit dem am Erregerknoten A angeschlossenen Netz aus. Die Ausgangwicklung 28 dieses Erregertransformators 8 ist üblicherweise mit den Wechselspannungsanschlüssen des Stromrichters 12 des Umrichters 24 verbunden. Die Eingangswicklungen 30 des Zusatztransformators 18 sind mit den Wechselspannungsanschlüssen des Stromrichters 16 verknüpft, wobei dessen Ausgangswicklungen 32 jeweils seriell in den Leitungen R, S und T angeordnet sind.

Jede Phase R, S und T des erregerseitigen Stromrichters 12 des Umrichters 24 des Schrägtransformators 22 weist n elektrisch in Reihe geschaltete Doppelkaskaden 34 auf, die jeweils aus einem kapazitiven Energiespeicher 36 und zwei Schalteinrichtungen 38 bestehen, die elektrisch parallel zum Energiespeicher 36 geschaltet sind. Als kapazitiver Energiespeicher 36 sind zwei elektrisch in Reihe geschaltete Kondensatoren 40 vorgesehen. Die Anzahl der Kondensatoren ist von der Punktzahl der Schalteinrichtung 38 abhängig, wobei bei einer n-Punktschalteinrichtung 38 n-1 Kondensatoren 40 für den kapazitiven Energiespeicher 36 benötigt werden. Jede Phase R, S und T des ausgangsseitigen Stromrichter 16 weist n Vierquadrantensteller 42 auf, wobei jeder Vierquadrantensteller 42 aus zwei elektrisch in Reihe geschalteten Kondensatoren 44 und zwei Dreipunkt-Schalteinrichtungen 38 besteht, die elektrisch parallel zur Reihenschaltung der Kondensatoren 44 geschaltet sind. Der Aufbau eines derartigen Vierquadrantenstellers 42 ist aus dem eingangs genannten Aufsatz "Statischer Umrichter Muldenstein" bekannt. Der Zusatztransformator 18 ist je Phase R, S, T aus n Zweiwicklungstransformatoren 46 aufgebaut, wobei jeweils die n Ausgangswicklungen 32 einer Phase seriell in den Leitungen R, S bzw. T des Netzes angeordnet sind. Die n Eingangswicklungen 30 einer Phase sind jeweils mit den Wechselspannungsanschlüssen der n Vierquadrantensteller 42 der gleichen Phase des ausgangsseitigen Stromrichters 16 verknüpft. Die Kondensatoren 40 und 44 bilden den kapazitiven Energiespeicher des Umrichters 24, in dem die Kondensatoren 40 und 44 elektrisch parallel geschaltet sind.

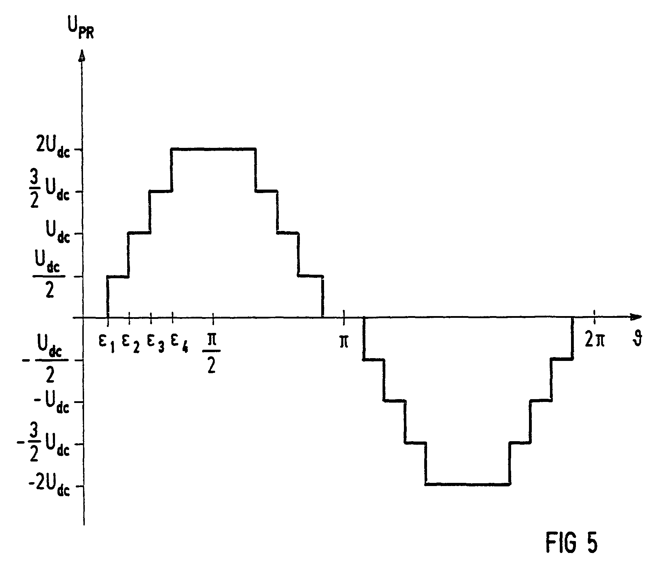

Durch das aufeinanderfolgende Ein- bzw. Ausschalten der Kondensatoren 40 in den Strompfad der einzelnen Phasen wird die Parallelspannung U_{PR} gebildet. Das Ein- bzw. Ausschalten geschieht mittels der Dreipunkt-Schalteinrichtungen 38. Es entsteht eine 4n+1-stufige Spannung U_{PR}. Die Zeitpunkte für das Ein- bzw. Ausschalten der Kondensatoren 40 können so gewählt werden, daß diese treppenförmige Ausgangsspannung U_{PR} des Kaskadenstromrichters 12 möglichst gut der Sinusform entspricht. Die Figur 5 zeigt einen möglichen Verlauf der Ausgangsspannung U_{PR}, wenn zwei Doppelkaskaden 34 vorhanden sind und alle Spannungen der Kondensatoren 40 auf die gleiche Spannung U_{dc}/2 aufgeladen sind.

Die Schrägspannung U_{SR} setzt sich aus den n Teilspannungen U_{SR1},..., U_{SRn} zusammen, die durch n Vierquadrantensteller 42 aus der Gleichspannung von n · 2 Kondensatoren 44 gebildet werden. Die n Teilspannungen U_{SR1},..., U_{SRn} werden über n Zweiwicklungstransformatoren 46 je Phase R, S, T in der Übertragungsleitung 2 eingeprägt. Durch entsprechendes Schalten der Dreipunkt-Schalteinrichtungen 38 können unterschiedlich breite Spannungsblöcke erzeugt werden, so daß sich eine Schrägspannung U_{SR} mit 4n+1 Stufen ergibt. Ein Kriterium für die Wahl der Stufen kann so gewählt werden, daß die Schrägspannung U_{SR} möglichst sinusförmig ist. Ein Beispiel für die Form der Schrägspannung U_{SR} ist durch die in Figur 5 gezeigte Spannung U_{PR} gegeben. Die Schrägspannung U_{SR} muß jedoch nicht gleich der Parallelspannung U_{PR} sein.

Jeder der Vierquadrantensteller 42 ist einer Doppelkaskade 34 zugeordnet und mit ihr durch Parallelschaltung der Kondensatoren 44 und 42 verbunden. Diese Parallelschaltung der Kondensatoren 44 und 42 gewährleistet die Übertragung der Wirkleistung zwischen dem Parallelzweig und dem Serienzweig des Leistungsflußreglers. Durch die Ansteuerung der Doppelkaskade 34 und der Vierquadrantensteller 42 sollte sichergestellt sein, daß die Wirkleistungsbilanz je Kondensator 40 und 44 im Mittel ausgeglichen ist.

Wie bereits erwähnt, ist bei der Ausführungsform gemäß Figur 3 die Schalteinrichtung 38 jeder Kaskade 34 dreipunktförmig ausgeführt. Als dreipunktförmige Schalteinrichtung 38 kann ein Dreipunkt-Modul entsprechend Figur 4, bestehend aus einem Brückenzweig mit vier abschaltbaren Leistungshalbleiterschaltern 48, beispielsweise abschaltbaren Thyristoren (GTO-Thyristoren) mit zugehörigen Freilaufdioden 50, die mit Hilfe zweier Mittelpunktsdioden 52 und 54 einen Dreipunkt-Ventil-zweig bilden. An den Anschlüssen +, M und M, - ist jeweils ein Kondensator 40 bzw. 44 schließbar. Die Phase R bzw. S bzw. T wird an dem Anschluß Ph angeschlossen. Der Aufbau eines derartigen Dreipunkt-Ventilzweiges ist identisch mit einem Brückenzweig eines Dreipunkt-Wechselrichters. Durch die Ansteuerung der abschaltbaren Leistungshalbleiterschalter 48 kann jeweils einer der beiden Kondensatoren 40 derartig in den Strompfad einer Phase R, S und T zugeschaltet werden, daß sich eine Parallelspannung U_{PR} gemäß Figur 5 einstellt.

Anstelle der Dreipunkt-Module können auch Zweipunkt- oder n-Punktmodule eingesetzt werden. Die Leistung jedes Moduls kann durch direkte Serienschaltung von abschaltbaren Leistungshalbleiterschaltern feinstufig erhöht werden. Dabei können redundante abschaltbare Leistungshalbleiterschalter eingebaut werden, was zu einer Erhöhung der Zuverlässigkeit der Stromrichter 12 und 16 führen würde.

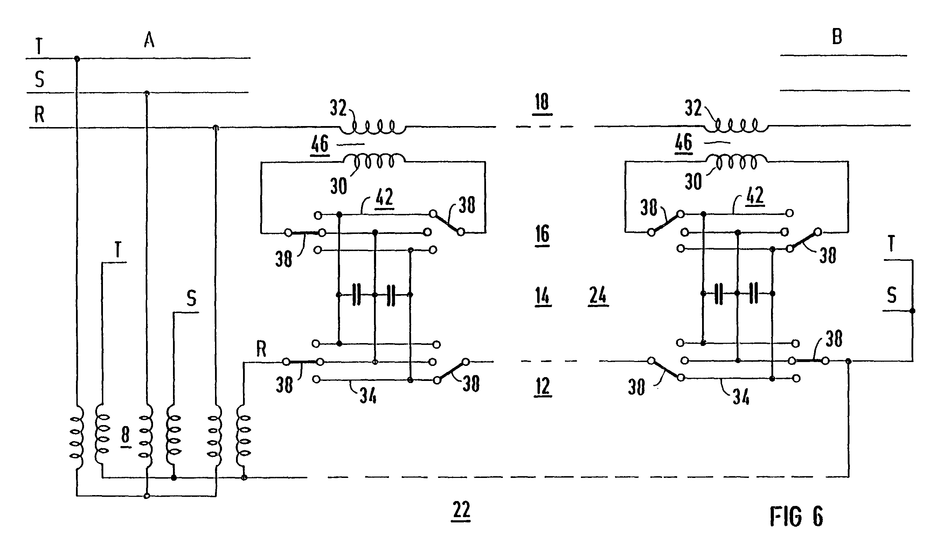

Die Figur 6 zeigt eine vorteilhafte Ausführungsform des erfindungsgemäßen Schrägtransformators 22. Der Unterschied zur Ausführungsform gemäß Figur 3 besteht darin, daß die Kondensatoren 44 jedes Vierquadrantenstellers 42 und der kapazitive Speicher 36 jeder Doppelkaskade 34 eine Baueinheit bilden. Somit verringert sich die Anzahl der Kondensatoren und deren Verdrahtung mit einem Vierquadrantensteller 42 und einer Doppelkaskade 34.

Die beiden Anschlüsse der Ausgangswicklung der elektrisch in Reihe geschalteten Zweiwicklungstransformatoren 46 sowie die beiden Anschlüsse der Eingangswicklungen 30 müssen gleichermaßen durch Strom belastbar sein. Eine vorteilhafte Ausführungsform des Leistungsflußreglers entsteht durch den Einsatz üblicher Einphasentransformatoren im Längszweig 20. Weitere Vorteile lassen sich erzielen, wenn die n Zweiwicklungstransformatoren 46 einer Phase R bzw. S bzw. T weitestgehend zusammengefaßt werden. Zum Beispiel kann bei einem erfindungsgemäßen Schrägtransformator, der aus drei Doppelkaskaden 34 und zugeordneten Vierquadrantenstellern 42 besteht, je Phase R bzw. S bzw. T ein Dreiwicklungs-Transformator mit Fünfschenkelkern eingesetzt werden.

Die Vorteile dieses erfindungsgemäßen Schrägtransformators sind:
- Die Vorteile der Kaskadenschaltung können im Querzweig 10 voll genutzt werden.
- Die Schrägspannung U_{SR} wird ebenfalls aus mehreren Spannungsstufen gebildet, was eine gute Annäherung an die Sinusform ermöglicht. Damit wird eine hohe Ausnutzung der eingesetzten abschaltbaren Leistungshalbleiterschalter und eine hinsichtlich der Verzerrungsströme günstige Betriebsweise erreicht.
- Bei der vorgeschlagenen Lösung des erfindungsgemäßen Schrägtransformators kann die Amplitude der Schrägspannung U_{SR} bei Aufrechterhaltung der Grundfrequenz-Modulation der GTO-Thyristoren-Ansteuerung durch die Breite der Spannungsblöcke der Teilspannungen schnell geändert werden.
- Die Leistung dieses Schrägtransformators kann durch mehrfaches Verwenden der gleichen Komponenten auf wirtschaftliche Weise den Anforderungen angepaßt werden. Für die einzelnen Komponenten können standardisierte Bausteine verwendet werden. Dies führt zu einem kostengünstigen Aufbau.

## Patentansprüche

1. Netzfreundlicher stromrichtergesteuerter, spannungseinprägender Schrägtransformator (22) großer Leistung, der einen Erregertransformator (8), einen Zusatztransformator (18) und einen Umrichter (24) aufweist, wobei der Umrichter (24) eingangsseitig mit dem Erregertransformator (8) und ausgangsseitig mit dem Zusatztransformator (18) verknüpft ist und aus zwei mit einem Gleichspannungs-Zwischenkreis (14) versehenen Stromrichtern (12,16) besteht, die jeweils abschaltbare Leistungshalbleiter aufweisen, **dadurch gekennzeichnet, daß** jede Phase (R, S, T) des erregerseitigen Stromrichters (12) n elektrisch in Reihe geschaltete Doppelkaskaden (34) aufweist, die jeweils aus einem kapazitiven Energiespeicher (36) und zwei Schalteinrichtungen (38) bestehen, die elektrisch parallel zum Energiespeicher (36) geschaltet sind, daß jede Phase (R,S,T) des ausgangsseitigen Stromrichters (16) n Vierquadrantensteller (42) aufweist, daß der Zusatztransformator (18) je Phase (R,S,T) aus n Zweiwikklungstransformatoren (46) besteht, die sekundärseitig elektrisch in Reihe geschaltet und primärseitig jeweils mit den Wechselspannungsanschlüssen der Vierquadrantensteller (42) verknüpft sind, und daß die Gleichspannungsanschlüsse jedes Vierquadrantenstellers (42) mit den entsprechenden Anschlüssen des Energiespeichers (36) einer Doppelkaskade (34) verbunden sind.

2. Netzfreundlicher stromrichtergespeister, spannungseinprägender Schrägtransformator (22) nach Anspruch 1, **dadurch gekennzeichnet, daß** die Kondensatoren (44) jedes Vierquadrantenstellers (42) und der kapazitive Speicher (36) jeder Doppelkaskade (34) eine Baueinheit bilden.

3. Netzfreundlicher stromrichtergesteuerter, spannungseinprägender Schrägtransformator (22) nach Anspruch 1, **dadurch gekennzeichnet, daß** die n Zweiwicklungstransformatoren (46) je Phase (R,S,T) zu einer Transformatoreinheit zusammengefaßt sind.

4. Netzfreundlicher stromrichtergesteuerter, spannungseinrägender Schrägtransformator (22) nach Anspruch 3, **dadurch gekennzeichnet, daß** als Transformatoreinheit je Phase (R,S,T) ein Dreiwicklungs-Transformator mit Fünfschenkelkern vorgesehen ist.

5. Netzfreundlicher stromrichtergesteuerter, spannungseinprägender Schrägtransformator (22) nach Anspruch 1, **dadurch gekennzeichnet, daß** als Schalteinrichtung (38) ein Zweipunkt-Modul vorgesehen ist.

6. Netzfreundlicher stromrichtergesteuerter, spannungseinprägender Schrägtransformator (22) nach Anspruch 1, **dadurch gekennzeichnet, daß** als Schalteinrichtung (38) ein Dreipunkt-Modul vorgesehen ist.

7. Netzfreundlicher stromrichtergesteuerter, spannungseinprägender Schrägtransformator (22) nach Anspruch 1, **dadurch gekennzeichnet, daß** als Schalteinrichtung (38) ein n-Punkt-Modul vorgesehen ist.

8. Netzfreundlicher stromrichtergesteuerter, spannungseinprägender Schrägtransformator (22) nach Anspruch 1, **dadurch gekennzeichnet, daß** als kapazitiver Energiespeicher (36) wenigstens ein Kondensator (40) vorgesehen ist, wobei sich die Anzahl der Kondensatoren (40) nach der Punktzahl der Schalteinrichtung (38) richtet.

## Claims

1. A network-compatible, current-converter-controlled, voltage-applying, high-power, oblique transformer (22) which comprises an exciter transformer (8), an additional transformer (18) and a converter (24), wherein the converter (24) is linked at its input end to the exciter transformer (8) and at its output end to the additional transformer (18) and consists of two current converters (12, 16) which are provided with a d.c.-voltage link (14) and each comprise turn-off power semiconductors, **characterised in that** each phase (R, S, T) of the exciter-side current converter (12) comprises n double cascades (34) which are electrically connected in series and each consist of a capacitive energy store (36) and two switching devices (38) which are connected electrically in parallel to the energy store (36), that each phase (R, S, T) of the output-side current converter (16) comprises h four-quadrant controllers (42), that in respect of each phase (R, S, T) the additional transformer (18) consists of n two-winding transformers (46) which on the secondary side are electrically connected in series and on the primary side are each linked to the a.c.-voltage terminals of the four-quadrant controllers (42), and that the d.c. voltage terminals of each four-quadrant controller (42) are connected to the corresponding terminals of the energy store (36) of a double cascade (34).

2. A network-compatible, current-converter-fed, voltage-applying, oblique transformer (22) according to Claim 1, **characterised in that** the capacitors (44) of each four-quadrant controller (42) and the capacitive store (36) of each double cascade (34) form a unit.

3. A network-compatible, current-converter-controlled, voltage-applying, oblique transformer (22) according to Claim 1, **characterised in that** in respect of each phase (R, S, T) the n two-winding transformers (46) are combined to form a transformer unit.

4. A network-compatible, current-converter-controlled, voltage-applying, oblique transformer (22) according to Claim 3, **characterised in that** in respect of each phase (R, S, T) a three-winding transformer with five-arm core is provided as transformer unit.

5. A network-compatible, current-converter-controlled, voltage-applying, oblique transformer (22) according to Claim 1, **characterised in that** a two-point module is provided as switching device (38).

6. A network-compatible, current-converter-controlled, voltage-applying oblique transformer (22) according to Claim 1, **characterised in that** a three-point module is provided as switching device (38).

7. A network-compatible, current-converter-controlled, voltage-applying, oblique transformer (22) according to Claim 1, **characterised in that** a n-point module is provided as switching device (38).

8. A network-compatible, current-converter-controlled, voltage-applying, oblique transformer (22) according to Claim 1, **characterised in that** at least one capacitor (40) is provided as capacitive energy store (36), where the number of capacitors (40) corresponds to the number of points of the switching device (38).

## Revendications

1. Transformateur oblique (22) de puissance élevée, compatible avec le réseau, commandé par convertisseur de courant, appliquant une tension et comportant un transformateur excitateur (8), un transformateur supplémentaire (18) et un convertisseur (24), le convertisseur (24) étant relié côté entrée au' transformateur excitateur (8) et côté sortie au transformateur supplémentaire (18) et étant constitué de deux convertisseurs de courant (12, 16) munis d'un circuit intermédiaire en tension continue (14) et comportant chacun des semi-conducteurs de puissance interruptibles, **caractérisé par le fait que** chaque phase (R, S, T) du convertisseur de courant côté excitateur (12) comporte n doubles cascades (34) branchées électriquement en série qui sont constituées chacune d'un accumulateur d'énergie capacitif (36) et de deux dispositifs commutateurs (38) qui sont branchés électriquement en parallèle avec l'accumulateur d'énergie (36), que chaque phase (R, S, T) du convertisseur de courant côté sortie (16) comporte n régulateurs à quatre quadrants (42), que le transformateur supplémentaire (18) est constitué pour chaque phase (R, S, T) de n transformateurs à deux enroulements (46) qui sont branchés électriquement en série côté secondaire et qui sont reliés respectivement aux bornes de tension alternative des régulateurs à quatre quadrants (42) côté primaire et que les bornes de tension continue de chaque régulateur à quatre quadrants (42) sont reliées aux bornes correspondantes de l'accumulateur d'énergie (36) d'une double cascade (34).

2. Transformateur oblique (22), compatible avec le réseau, commandé par convertisseur de courant et appliquant une tension, selon la revendication 1, **caractérisé par le fait que** les condensateurs (44) de chaque régulateur à quatre quadrants (42) et l'accumulateur capacitif (36) de chaque double cascade (34) forment une unité.

3. Transformateur oblique (22), compatible avec le réseau, commandé par convertisseur de courant et appliquant une tension, selon la revendication 1, **caractérisé par le fait que** les n transformateurs à deux enroulements (46) sont regroupés pour chaque phase (R, S, T) en une unité formant transformateur.

4. Transformateur oblique (22), compatible avec le réseau, commandé par convertisseur de courant et appliquant une tension, selon la revendication 3, **caractérisé par le fait qu'**il est prévu comme unité formant transformateur pour chaque phase (R, S, T) un transformateur à trois enroulements ayant un noyau à cinq branches.

5. Transformateur oblique (22), compatible avec le réseau, commandé par convertisseur de courant et appliquant une tension, selon la revendication 1, **caractérisé par le fait qu'**il est prévu comme dispositif commutateur (38) un module à deux positions.

6. Transformateur oblique (22), compatible avec le réseau, commandé par convertisseur de courant et appliquant une tension, selon la revendication 1, **caractérisé par le fait qu'**il est prévu comme dispositif commutateur (38) un module à trois positions.

7. Transformateur oblique (22), compatible avec le réseau, commandé par convertisseur de courant et appliquant une tension, selon la revendication 1, **caractérisé par le fait qu'**il est prévu comme dispositif commutateur (38) un module à n positions.

8. Transformateur oblique (22), compatible avec le réseau, commandé par convertisseur de courant et appliquant une tension, selon la revendication 1, **caractérisé par le fait qu'**il est prévu comme accumulateur d'énergie capacitif (36) au moins un condensateur (40), le nombre des condensateurs (40) dépendant du nombre de positions du dispositif commutateur (38).
